(19) Europäisches Patentamt
European Patent Office
Office européen des brevets

(11) **EP 4 570 536 A1**

(12) **EUROPÄISCHE PATENTANMELDUNG**

(43) Veröffentlichungstag:
**18.06.2025 Patentblatt 2025/25**

(21) Anmeldenummer: **24212451.9**

(22) Anmeldetag: **12.11.2024**

(51) Internationale Patentklassifikation (IPC):
**B60C 23/04** *(2006.01)* **H01Q 1/22** *(2006.01)*

(52) Gemeinsame Patentklassifikation (CPC):
**B60C 23/0452; B60C 23/0493; H01Q 1/2241**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **11.12.2023 DE 102023212478**

(71) Anmelder: **Continental Reifen Deutschland GmbH
30175 Hannover (DE)**

(72) Erfinder:
• **Dr. Reck, Siegfried
30175 Hannover (DE)**
• **Dr. Kurz, Martin
30175 Hannover (DE)**
• **Dr. Barho, Erhard
30419 Hannover (DE)**

(74) Vertreter: **Continental Corporation
c/o Continental AG
Intellectual Property
Postfach 169
30001 Hannover (DE)**

(54) **ELASTOMERKÖRPER, VORZUGSWEISE REIFEN**

(57) Die vorliegende Erfindung betrifft Elastomerkörper, vorzugsweise Reifen, mit einem elastomeren Material (6) und mit elektrisch leitenden Festigkeitsträgern (4), welche im elastomeren Material (6) und/oder parallel zum elastomeren Material (6) angeordnet sind. Der Elastomerkörper ist gekennzeichnet durch wenigstens eine Patch-Antenne (10) mit rechtwinkelig gekreuzten Dipolen und/oder wenigstens eine zirkular polarisierte Patch-Antenne (10).

FIG 3

EP 4 570 536 A1

**Beschreibung**

Die vorliegende Erfindung betrifft einen Elastomerkörper, vorzugsweise einen Reifen.

Die Messung der Profiltiefe von Reifen ist von allgemeinem Interesse innerhalb der Reifenindustrie bzw. den davon betroffenen Bereichen wie z.B. bei Flotten, Service & Maintenance, Pay-per-Kilometer-Verträge und dergleichen.

Eine bekannte Technik die Profiltiefen von Reifen im Service zu bestimmen, sind sogenannte "Drive Over Solutions (DOS)", bei denen eine flache Messstation auf dem Untergrund aufgebracht bzw. in einer Vertiefung in den Untergrund eingebracht wird. Die Profiltiefe der Reifen wird gemessen, wenn das Fahrzeug in geringer Geschwindigkeit über die Messstation fährt.

Eine Aufgabe der vorliegenden Erfindung ist es, die Möglichkeiten zur Bestimmung der Profiltiefen von Reifen der eingangs beschriebenen Art zu verbessern. Dies soll insbesondere möglichst einfach, kostengünstig und bzw. oder kompakt erfolgen können. Zumindest soll eine Alternative zu den bekannten Möglichkeiten geschaffen werden.

Die Aufgabe wird erfindungsgemäß durch einen Elastomerkörper, vorzugsweise durch einen Reifen, mit den Merkmalen gemäß Patentanspruch 1 gelöst.

Somit betrifft die vorliegende Erfindung einen Elastomerkörper, vorzugsweise einen Reifen, mit einem elastomeren Material und mit elektrisch leitenden Festigkeitsträgern, welche im elastomeren Material und bzw. oder parallel zum elastomeren Material angeordnet sind. Der Elastomerkörper kann ein Reifen, ein Transportband, ein sonstiger Riemen, ein Schlauch und dergleichen sein. Die Festigkeitsträger können insbesondere Zugträger sein.

Der Elastomerkörper ist gekennzeichnet durch wenigstens eine Patch-Antenne mit rechtwinkelig gekreuzten Dipolen und bzw. oder wenigstens eine zirkular polarisierte Patch-Antenne. Da die genauen Winkel der elektrisch leitenden Festigkeitsträger unbekannt sind und in unterschiedlichen Winkeln angeordnet sein können, kann auf diese Art und Weise der Winkel zwischen den Dipolen und der Erstreckungsrichtung der elektrisch leitenden Festigkeitsträger vor einer Messung der Profiltiefe ermittelt werden, um die Ergebnisse der Messung vergleichbar zu machen.

Ein Ausführungsbeispiel und weitere Vorteile der Erfindung werden nachstehend im Zusammenhang mit den folgenden Figuren erläutert. Darin zeigt:

Fig. 1    eine schematische Schnittdarstellung einer Versuchsanordnung eines Reifens;

Fig. 2    den Betrag des Reflexionsfaktors über dem Frequenzindex der Patch-Antenne des Reifens der Fig. 1;

Fig. 3    eine Detailansicht einer Patch-Antenne eines erfindungsgemäßen Reifens; und

Fig. 4    den Reflexionsfaktor in Abhängigkeit des Winkels φ.

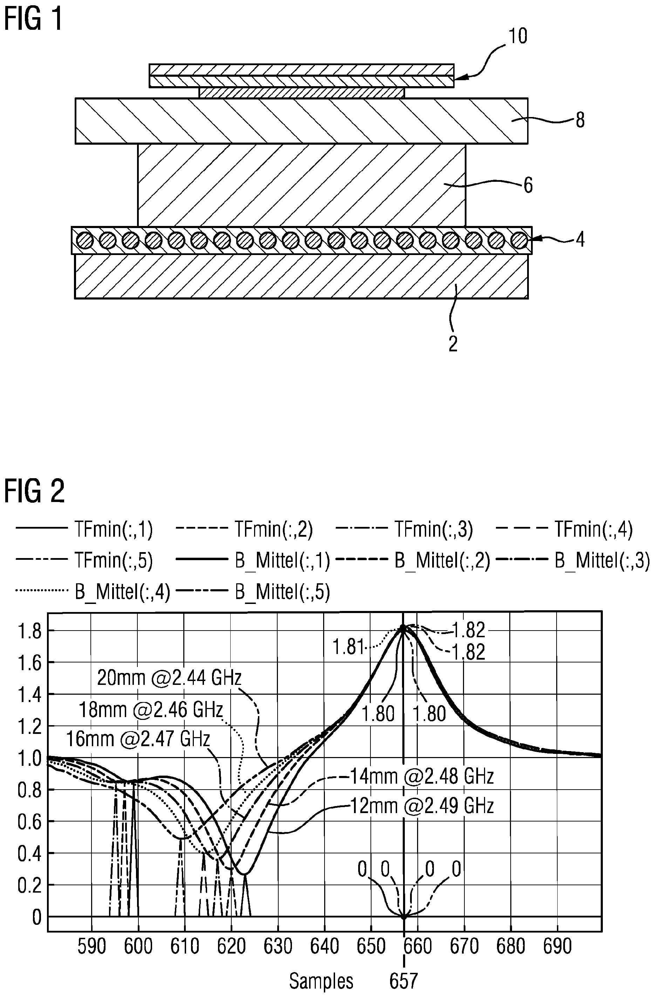

Die Figur 1 zeigt die Anordnung für die Machbarkeitsprüfung von Messungen der Profiltiefe.

Auf einer ersten isolierenden Schicht 2 aus PTFE befindet sich der kalandrierte Stahl-Cord 4 und darüber die Stoffprobe einer Reifenmischung als Elastomermaterial 6 bzw. als elastomeres Material 6. Eine zweite Schicht 8 deckt das Elastomermaterial 6 ab und sorgt für einen konstanten Abstand zwischen der Patch-Antenne 10 und der Stoffprobe 6.

Die Ergebnisse sind in Figur 2 dargestellt. Aufgetragen ist der Betrag des Reflexionsfaktors über dem Frequenzindex. Da der Abstand der Cord-Fäden 4 wesentlich kleiner als die Wellenlänge der elektromagnetischen Anregung ist, wurden die Cord-Fäden 4 als homogene Reflexionsfläche angenommen.

Messungen an realen Reifen haben jedoch gezeigt, dass das Ergebnis der Profiltiefenmessung von dem Winkel abhängt, den die Polarisierungsrichtung der Patch-Antenne 10 mit der Orientierung der Cord-Fäden 4 bildet. Da die Cord-Fäden 4 in den Gürtellagen in unterschiedlichen Winkeln angeordnet sein können, muss dieser Winkel vor einer Messung der Profiltiefe ermittelt werden, um die Ergebnisse vergleichbar zu machen. Dies ist ein gravierender Nachteil.

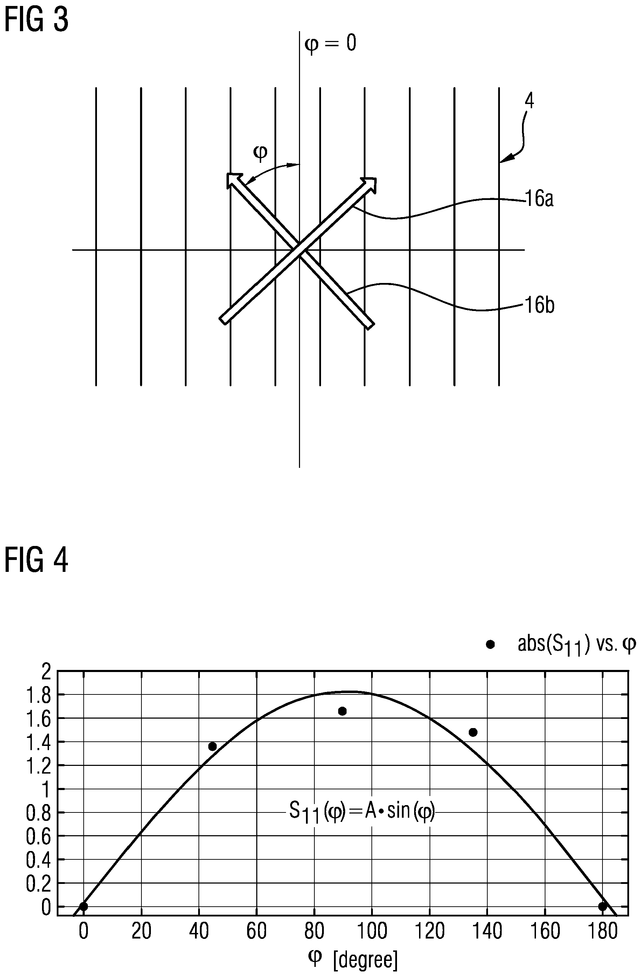

Erfindungsgemäß wird dieser Nachteil durch eine Anordnung aus zwei Dipol-Antennen behoben, deren beide Polarisationsrichtungen 16a, 16b einen Winkel von 90 Grad bilden, siehe Figur 3.

Der Winkel φ zwischen dem Verlaufsrichtung der Cord-Fäden 14 und der ersten Polarisationsrichtung 16a des ersten Dipols ist nicht bekannt.

Wie die Figur 4 zeigt, gilt für den Reflexionsfaktor, der in Polarisationsrichtung 16a gemessen werden kann:

$$S\_a(\varphi) = A * \sin(\varphi).$$

Für die zweite Polarisationsrichtung 16b gilt entsprechend:

$$S\_b(\varphi) = A * \sin(\varphi + 90°) = A * \cos(\varphi).$$

Um die Amplitude A zu berechnen, werden S_a((φ) und S_b(φ) quadriert und aufsummiert:

$$\text{Ergebnis} = (A * \sin(\varphi))^2 + (A * \cos(\varphi))^2 = A^2 * (\sin^2(\varphi) + \cos^2(\varphi))$$

Wegen der trigonometrischen Beziehung $\sin^2(x) + \cos^2(x) = 1$, ist das Ergebnis nicht mehr abhängig von dem Winkel $\varphi$.

Um die Amplitude A zu ermitteln, wird aus dem Ergebnis die positive Wurzel gezogen.

Mit Hilfe der trigonometrischen Beziehung $\sin^2(\varphi) + \cos^2(\varphi) = 1$, lässt sich Amplitude A berechnen.

Alternativ zu den gekreuzten Dipolen können zirkular polarisierte Patch-Antennen 10 verwendet werden.

**Bezugszeichenliste (Teil der Beschreibung)**

| | |
|---|---|
| A | Amplitude |
| $\varphi$ | Winkel zwischen der Verlaufsrichtung der Cord-Fäden 4 und der ersten Polarisationsrichtung 16a |

| | |
|---|---|
| 2 | erste isolierende Schicht |
| 4 | elektrisch leitende Festigkeitsträger; Stahl-Corde |
| 6 | elastomeren Material; Elastomermaterial |
| 8 | zweite isolierende Schicht |
| 10 | Patch-Antenne |
| 16a | erste Polarisationsrichtung |
| 16b | zweite Polarisationsrichtung |

**Patentansprüche**

**1.** Elastomerkörper, vorzugsweise Reifen,

mit einem elastomeren Material (6) und
mit elektrisch leitenden Festigkeitsträgern (4), welche im elastomeren Material (6) und/oder parallel zum elastomeren Material (6) angeordnet sind,
**gekennzeichnet durch**
wenigstens eine Patch-Antenne (10) mit rechtwinkelig gekreuzten Dipolen und/oder
wenigstens eine zirkular polarisierte Patch-Antenne (10).

# FIG 1

# FIG 2

——— TFmin(:,1)  ----- TFmin(:,2)  —·—· TFmin(:,3)  — — — TFmin(:,4)
—·—· TFmin(:,5)  ——— B_Mittel(:,1) ----- B_Mittel(:,2) —·—· B_Mittel(:,3)
··········· B_Mittel(:,4) —·—· B_Mittel(:,5)

Samples   657

## FIG 3

## FIG 4

$$S_{11}(\varphi) = A \cdot \sin(\varphi)$$

abs($S_{11}$) vs. $\varphi$

$\varphi$ [degree]

Europäisches
Patentamt

European
Patent Office

Office européen
des brevets

# EUROPÄISCHER RECHERCHENBERICHT

Nummer der Anmeldung

EP 24 21 2451

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2017 102186 U1 (4JET TECH GMBH [DE]) 5. Mai 2017 (2017-05-05) * Absatz [0085] - Absatz [0121]; Ansprüche 1-40; Abbildungen 1-6 * | 1 | INV. B60C23/04 H01Q1/22 |
| Y | EP 1 049 196 A1 (BRIDGESTONE FIRESTONE INC [US]) 2. November 2000 (2000-11-02) * Absatz [0004]; Abbildung 2 * * Absatz [0017] - Absatz [0028]; Abbildungen 1,2 * | 1 | |
| Y | US 2005/275518 A1 (ADAMSON JOHN D [FR] ET AL) 15. Dezember 2005 (2005-12-15) * Abbildung 9 * | 1 | |
| Y | US 2014/368327 A1 (DARRER FRANZ MICHAEL [AT] ET AL) 18. Dezember 2014 (2014-12-18) * Abbildung 9 * | 1 | |
| Y | US 2011/000969 A1 (TUCKER RANDALL L [US]) 6. Januar 2011 (2011-01-06) * Abbildungen 1-4 * | 1 | RECHERCHIERTE SACHGEBIETE (IPC) B60C H01Q |

Der vorliegende Recherchenbericht wurde für alle Patentansprüche erstellt

| Recherchenort | Abschlußdatum der Recherche | Prüfer |
|---|---|---|
| München | 20. Februar 2025 | Billen, Karl |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 21 2451

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2025

| Im Recherchenbericht angeführtes Patentdokument | Datum der Veröffentlichung | Mitglied(er) der Patentfamilie | Datum der Veröffentlichung |
|---|---|---|---|
| DE 202017102186 U1 | 05-05-2017 | DE 202017102186 U1 | 05-05-2017 |
| | | EP 3609724 A1 | 19-02-2020 |
| | | WO 2018189258 A1 | 18-10-2018 |
| EP 1049196 A1 | 02-11-2000 | BR 0002389 A | 31-10-2000 |
| | | CA 2307072 A1 | 29-10-2000 |
| | | EP 1049196 A1 | 02-11-2000 |
| | | ES 2304921 T3 | 01-11-2008 |
| | | JP 4512231 B2 | 28-07-2010 |
| | | JP 2000351308 A | 19-12-2000 |
| | | KR 20010007027 A | 26-01-2001 |
| | | US 6474380 B1 | 05-11-2002 |
| | | ZA 200001573 B | 28-09-2001 |
| US 2005275518 A1 | 15-12-2005 | KEINE | |
| US 2014368327 A1 | 18-12-2014 | CN 104239939 A | 24-12-2014 |
| | | CN 110414660 A | 05-11-2019 |
| | | DE 102014106128 A1 | 18-12-2014 |
| | | US 2014368327 A1 | 18-12-2014 |
| | | US 2016144674 A1 | 26-05-2016 |
| US 2011000969 A1 | 06-01-2011 | KEINE | |

EPO FORM P0461

Für nähere Einzelheiten zu diesem Anhang : siehe Amtsblatt des Europäischen Patentamts, Nr.12/82